# EUROPEAN PATENT SPECIFICATION

(11) **EP 2 892 659 B1**
(45) Date of publication and mention of the grant of the patent: **24.04.2019**
(21) Application number: 13758867.9
(22) Date of filing: 05.09.2013
(51) Int. Cl.: B05D 5/06, B32B 38/14, B42D 25/00, B41M 3/06, B44F 9/04, B44F 5/00, G06K 19/08, B42D 25/425, B42D 25/46, B42D 25/387, C09D 11/322, C09D 11/101, B32B 38/00, B05D 3/06, B42D 25/455

(54) **CARD WITH MARBLED VISUAL EFFECT AND ASSOCIATED MANUFACTURING PROCESS.**
KARTE MIT MARMOREFFEKT UND ENTSPRECHENDES HERSTELLUNGSVERFAHREN DAFÜR
CARTE À EFFET VISUEL MARBRÉ ET PROCESSUS DE FABRICATION ASSOCIÉ

(30) Priority: 05.09.2012 EP 12306057
(43) Date of publication of application: 15.07.2015
(73) Proprietor: GEMALTO SA, 92190 Meudon (FR)
(72) Inventor: KARAFOTIS, Stéphane, F-92190 Meudon (FR); SUBRA, Sébastien, F-92190 Meudon (FR)
(74) Representative: Cassagne, Philippe M.J.
(86) International application number: PCT/EP2013/068386
(87) International publication number: WO 2014/037450

(56) References cited:
- WO-A1-2011/124081
- DE-A1- 4 404 128
- US-A- 2 612 456
- US-A1- 2011 073 640

## Description

This invention concerns the graphics personalisation of documents, particularly the graphics personalisation of multilayer documents such as cards to the ISO 7810 standard so as to give them a marbled visual effect.

In order to create a marbled visual effect on a multilayer document, there is a known process for reproducing on each document a marbled pattern made up of at least two colours by means of printing. However, the pattern is identical for each printed document, and its rendering may be affected by the treatment and protection that is subsequently applied to the document.

Another known means for creating a marbled visual effect is to print a first pattern on the document followed by the printing of a second pattern with ink, which, when the solvents contained in it evaporate, forms cracks through which the first pattern can be seen. The marbled visual effect in this case is random and its rendering may also be affected by the treatment and protection applied subsequently to the document. Further, the use of ink comprising solvents that allow the formation of cracks can lead to additional manufacturing costs because a drying time is required for the solvents to evaporate so that the marbled visual effect is satisfactory.

One of the aims of this invention is thus to remedy at least some of the drawbacks of the prior art and to propose a process for manufacturing a card, particularly to the ISO 7810 standard, with a marbled effect that is durable, satisfactory and economical, involving limited manufacturing costs.

US2011/0073640 describes a process for manufacturing a card with marbled visual effect according to the preamble of claim 1. This document further proposes that the card once produced is passed through a set of rollers configured to deform the card to the point where the material layer develops fissures or cracks.

This solution of the prior art adds an additional step of roller pass-through in the manufacturing process.

According to the invention, it is proposed to solve it according to the characterizing position of the claim 1

The fact that the cracks are formed during the standard step of laminating the card makes it possible to integrate the formation of cracks and thus the marbled visual effect into the standard manufacturing process and thus limit the costs of manufacturing and of creating the visual marbled effect.

In one aspect of the process, the ink for printing the pattern contains:
30 to 50% hexamethylene diacrylate,
20 to 30% pentaerythritol triacrylate,
10 to 30% 2-methyl-1-4-(methylthio)pheny-2-morpholino-propan-1-one, and
1 to 20% coloured pigments.

In another aspect of the process, the substrate layer comprises a prior pattern printed on at least one of its sides and the pattern cracked by lamination is printed directly on said prior pattern.

In another aspect of the process, the lamination step comprises at least the following:
- a first treatment at temperature ranging from 110 to 150°C with pressure of 80 to 120N/cm² for 10 to 20 min,
- a second treatment at temperature ranging from 16 to 20°C with pressure of 180 to 220N/cm² for 10 to 20 min.

In another aspect of the process, the pattern is printed by ink jet printing.

In another aspect of the process, ultraviolet exposure is carried out simultaneously with the printing of the pattern.

Other characteristics and benefits of the invention will become clearer in the description below, provided as an illustrative and non-limitative example, and the attached drawings, where:
- figure 1 is a schematic sectional representation of a card,
- figure 2 is a schematic representation of the top view of the card in figure 1.

In the different figures, identical elements bear the same reference numbers.

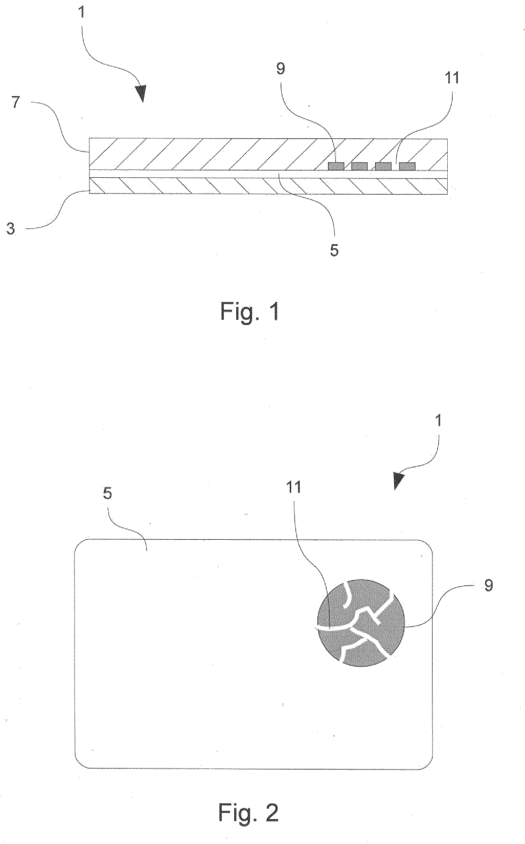

Figure 1 is a schematic sectional representation of a card 1 to standard ISO 7810. That card 1 may for example be a bank card for payment, an identification card, an identity card or a magnetic card, a smart card or a Near Field Communication (NFC) card.

The card 1 comprises a substrate layer 3 comprising a first and a second side. On at least one of the first and second sides, a prior pattern 5 may be printed. The substrate layer 3 may be made up of only one layer or comprise different superposed layers that make up the card 1, for example by incorporating a chip and an NFC antenna. The prior pattern 5 is a standard pattern print, known to the person of the art and usually created during a step for the graphics personalisation of a card 1. The prior pattern 5 may cover all or part of the substrate layer 3.

A pattern 9 cracked by lamination is printed on at least one of the sides of the substrate layer 3. If the substrate layer 3 comprises a prior pattern 5, the pattern 3 may be printed directly on said prior pattern 5. The cracks 11 of the pattern 9 are such that the colour located underneath said pattern 9 can be seen through the cracks in order to create the marbled visual effect. For that marbled visual effect to be more noticeable, contrasting colours may be used for the different patterns 5 and 9 or the pattern 9 may be printed in colour that contrasts with that of the substrate layer 3, when it is printed directly on it. The pattern 9 may cover all or part of the prior pattern 5 or the substrate layer 3. For security use, the difference between the inks of the two different patterns can be under particular lighting condition, one of the inks can change of colour in a non-visible spectrum.

The substrate layer 3 and the different patterns 5, 9 are generally covered with a translucent protective layer 7. Figure 2 shows the card 1 of figure 1 in a top view with the pattern 9 and the prior pattern 5 visible through the protective layer 7. The colour of the prior pattern 5 can be seen through the cracks 11.

The printing ink used to make the pattern 9 is advantageously formulated to contain:
- 30 to 50% hexamethylene diacrylate, CAS (Chemical Abstracts Service) reference 13048-33-8,
- 20 to 30% pentaerythritol triacrylate, CAS reference 3524-68-3,
- 10 to 30% de 2-methyl-1-4-(methylthio)pheny-2-morpholino-propan-1-one, CAS reference 71868-10-5, and
- 1 to 20% coloured pigments.

Hexamethylene acrylate is a polymerising compound that is commonly used in the area of inks in order to reinforce the bonding of the ink. For its part, pentaerythritol triacrylate is a hardener that makes it possible to make the printing more resistant. 2-methyl-1-4-(methylthio) pheny-2-morpholino-propan-1-one is an ultraviolet polymerisation photo initiator. Lastly, the coloured pigments are elements that give colour to the ink used for printing the pattern 9. These coloured pigments may for example be carbon black in a 1 to 5% proportion in the formulation of ink for black colour or titanium dioxide in a 10 to 20% proportion in the formulation of ink for white colour.

The ink used for printing the pattern 9 as formulated above is cured by UV exposure and does not form cracks 11 during the hardening process. The cracks 11 are made by thermal and mechanical treatment applied to the pattern 9. The treatment is carried out by the treatment for laminating the card 1 in order to bond the different layers that make it up to each other, particularly for the bonding of the protective layer 7. The fact that the printing ink of the pattern 9 is cracked when the card 1 is laminated by thermal and mechanical treatment ensures greater durability of the marbled effect, as it is in a way frozen by the adhesion of the protective layer 7 and unaffected when the layer is laminated.

The invention also concerns, according to dependent claim 4, a process for manufacturing a card 1 with a marbled visual effect comprising the step of supplying the substrate layer 3 as described above, at least one side of which comprising a printed prior pattern 5.

A step of printing the pattern 9 on at least part of at least one of the sides of the substrate layer or the first pattern 5 using ink formulated as follows:
- 30 to 50% hexamethylene diacrylate, CAS (Chemical Abstracts Service) reference 13048-33-8,
- 20 to 30% pentaerythritol triacrylate, CAS reference 3524-68-3,
- 10 to 30% de 2-methyl-1-4-(methylthio)pheny-2-morpholino-propan-1-one, CAS reference 71868-10-5, and
- 1 to 20% coloured pigments.

Advantageously, that second printing step is carried out by ink jet printing.

A step of exposing the pattern 9 to UV rays to cause the ink to harden.

A step of applying a protective layer 7 on the printed side or sides of the substrate layer 3.

And lastly a step of laminating the card 1 is performed. During that laminating step, the different layers, particularly the substrate layer 3 and the protective layer or layers 7 are joined to each other. The temperature is increase under pressure for insuring a good sticking between the layers. Further, that lamination step leads to the formation of cracks 11 on the pattern 9 in order to make the colour underneath said pattern 9 visible through said cracks 11.

The fact that the cracks 11 are formed during the standard lamination step of laminating a multilayer card 1 makes it possible to integrate the formation of cracks 11 and thus the marbled visual effect into the standard manufacturing process and thus limit the costs of manufacturing and of creating the visual marbled effect. The costs are all the more limited because the UV exposure step can be carried out simultaneously with the printing of the pattern 9.

Preferentially and in order to enlarge cracks 11 that improves the visual effect with the colour located underneath the pattern 9 while bonding the different layers to each other, the lamination treatment comprises:
- a first treatment at temperature ranging from 110 to 150°C with pressure of 80 to 120N/cm² for 10 to 20 min,
- a second treatment at temperature ranging from 16 to 20°C with pressure of 180 to 220N/cm² for 10 to 20 min.

Thus, it can be seen that because of the use of ink with a particular formulation for printing the pattern 9 and the formation of cracks 11 during the standard lamination step, the card 1 is given a durable marbled visual effect and that the manufacturing process limits the costs of creating such a marbled visual effect.

## Claims

1. A process for manufacturing a card (1) with a marbled visual effect, said process comprising the following steps:
- supply of a substrate layer (3) comprising a first and a second side,
- printing of a pattern (9) on at least one of the sides of the substrate layer (3) with an hardening material,
- causing the material to harden,
- applying a protective layer (7) on the printed side or sides of the substrate layer (3),
- laminating the card (1) so as to join the different layers (3, 7) to each other, **Characterized in that** the hardening material is an UV hardening ink and **in that**, after the step of
- exposing the pattern (9) to UV rays to cause the ink to harden, the card is laminated, the lamination of the card allowing to join the different layers to each other and allowing to crack the ink of the pattern (9) so as to make the colour located underneath said pattern (9) visible through the cracks (11) of the pattern (9).

2. A manuf acturing process according to daim 1 , **characterised in that** the ink for printing the pattern (9) contains:
- 30 to 50% hexamethylene diacrylate,
- 20 to 30% pentaerythritol triacrylate,
- 10 to 30% 2-methyl-1-4-(methylthio)pheny-2-morpholino-propan-
- 1-one, and
- 1 to 20% coloured pigments.

3. A manufacturing process according to daim 1, **characterised in that** the substrate layer (9) comprises a prior pattern (5) printed on at least one of its sides and that the pattern (9) is printed at least in part directly on said prior pattern (5).

4. A manufacturing process according to daim 1, **characterised in that** the lamination step comprises at least:
a first treatment at temperature ranging from 110 to 150T with pressure of 80 to 120N/cm² for 10 to 20 min,
a second treatment at temperature ranging from 16 to 20'C with pressure of 180 to 220N/cm² for 10 to 20 min.

5. A manufacturing process according to daim 1 **characterised in that** the pattern (9) is printed by inkjet printing.

6. A manufacturing process according to daim 1, **characterised in that** ultraviolet exposure is carried out simultaneously with the printing of the pattern (9).

## Patentansprüche

1. Ein Verfahren für die Herstellung einer Karte (1) mit Marmoreffekt, wobei das genannte Verfahren die folgenden Schritte umfasst:
- Auftragen einer Trägerschicht (3), was eine erste und eine zweite Seite umfasst.
- Drucken eines Musters (9) auf mindestens einer der Seiten der Trägerschicht (3) mit einem Härtemittel,
- wodurch das Material aushärtet.
- Auftragen einer Schutzschicht (7) auf die bedruckte Seite oder bedruckten Seiten der Trägerschicht (3).
- Laminieren der Karte (1), um die verschiedenen Schichten (3, 7) miteinander zu verbinden, was sich dadurch auszeichnet, dass es sich bei dem Härtemittel um eine UV-härtende Druckfarbe handelt und somit nach dem Schritt
- Einwirken von UV-Strahlen auf das Muster (9), damit die Druckfarbe aushärtet, die Karte laminiert wird. Durch das Laminieren der Karte verbinden sich die verschiedenen Schichten miteinander und die Druckfarbe des Musters (9) reißt, so dass die Farbe unter dem genannten Muster (9) durch die Risse (11) des Musters (9) sichtbar wird.

2. Ein Herstellungsverfahren nach Anspruch 1 zeichnet sich dadurch aus, dass die Druckfarbe zum Drucken des Musters (9) zusammengesetzt ist aus:
- 30 bis 50 % Hexandioldiacrylat
- 20 bis 30 % Pentaerythritoltriacrylat
- 10 bis 30 % 2-Methyl-1-4-(Methylthio)phenyl-2-Morpholin-1-Propanon und
- 1 bis 20 % Farbpigmente.

3. Ein Herstellungsverfahren nach Anspruch 1 zeichnet sich dadurch aus, dass die Trägerschicht (9) ein Muster (5) enthält, das zuvor auf mindestens einer ihrer Seiten gedruckt wurde und dass das Muster (9) zumindest teilweise direkt auf das genannte zuvor gedruckte Muster (5) gedruckt wird.

4. Ein Herstellungsverfahren nach Anspruch 1 zeichnet sich dadurch aus, dass der Schritt des Laminierens mindestens die folgenden Schritte umfasst:
- Eine erste Behandlung bei einer Temperatur von 110 bis 150 °C bei einem Druck von 80 bis 120 N/cm² für 10 bis 20 Minuten.
- Eine zweite Behandlung bei einer Temperatur von 16 bis 20 °C bei einem Druck von 180 bis 220 N/cm² für 10 bis 20 Minuten.

5. Ein Herstellungsverfahren nach Anspruch 1 zeichnet sich dadurch aus, dass das Muster (9) im Tintenstrahldruckverfahren hergestellt wird.

6. Ein Herstellungsverfahren nach Anspruch 1 zeichnet sich dadurch aus, dass das Einwirken des ultravioletten Lichts gleichzeitig mit dem Druck des Musters (9) erfolgt.

## Revendications

1. Processus de fabrication d'une carte (1) pourvue d'un effet visuel marbré, ledit processus comprenant les étapes suivantes :
- - la fourniture d'une couche de substrat (3) présentant un premier et un second côté,
- - l'impression d'un motif (9) sur au moins l'un des côtés de la couche de substrat (3), à l'aide d'un matériau durcissant,
- - provoquant le durcissement du matériau,
- - l'application d'une couche protectrice (7) sur le ou les côtés imprimés de la couche de substrat (3),
- - le laminage de la carte (1) de sorte à assembler les différentes couches (3, 7) entre elles, **caractérisé en ce que** le matériau durcissant est une encre durcissant aux UV et **en ce que**, après l'étape qui consiste à :
- - exposer le modèle (9) à des rayons UV pour faire durcir l'encre, la carte est laminée, le laminage de la carte permettant d'assembler les différentes couches les unes avec les autres et de fissurer l'encre du modèle (9) de sorte à rendre la couleur située sous ledit modèle (9) visible à travers les fissures (11) du modèle (9).

2. Processus de fabrication selon la revendication 1, **caractérisé en ce que** l'encre utilisée pour l'impression du modèle (9) contient :
- 30 à 50 % de diacrylate d'hexaméthylène,
- 20 à 30 % de triacrylate de pentaérythritol,
- 10 à 30 % de 2-méthyl-1-(4-méthylthiophényl)-2-morpholinopropan-1-one et
- 1 à 20 % de pigments colorés.

3. Processus de fabrication selon la revendication 1, **caractérisé en ce que** la couche de substrat (9) comprend un modèle préalable (5) imprimé sur au moins l'un de ses côtés et **en ce que** le modèle (9) est imprimé au moins en partie directement sur ledit modèle préalable (5).

4. Processus de fabrication selon la revendication 1, **caractérisé en ce que** l'étape de laminage comprend au moins :
- un premier traitement à une température comprise entre 110 et 150 °C et à une pression de 80 à 120 N/cm² pendant 10 à 20 min,
- un second traitement à une température comprise entre 16 et 20 °C et à une pression de 180 à 220 N/cm² pendant 10 à 20 min.

5. Processus de fabrication selon la revendication 1, **caractérisé en ce que** le modèle (9) est imprimé par impression à jet d'encre.

6. Processus de fabrication selon la revendication 1, **caractérisé en ce que** l'exposition aux rayons ultraviolets est réalisée simultanément à l'impression du modèle (9).
